# EUROPEAN PATENT APPLICATION

(11) **EP 1 263 149 A2**
(43) Date of publication of application: **04.12.2002**
(21) Application number: 02000236.6
(22) Date of filing: 14.01.2002
(51) Int. Cl.: H04B 1/707

(54) **CDMA receiver**

(30) Priority: 31.05.2001 JP 2001165103
(71) Applicant: FUJITSU LIMITED, Kawasaki-shi, Kanagawa 211-8588 (JP)
(72) Inventor: Okazaki, Yuuki, Fujitsu Higashi-Nihon Digital, Kita-ku, Sapporo-shi, Hokkaido 060-0807 (JP); Kobori, Satoshi, Fujitsu Higashi-Nihon Digital, Kita-ku, Sapporo-shi, Hokkaido 060-0807 (JP); Hikita, Masahiko, Fujitsu Higashi-Nihon Digital, Kita-ku, Sapporo-shi, Hokkaido 060-0807 (JP); Takeuchi, Masatsugu, Fujitsu Higashi-Nihon Digital, Kita-ku, Sapporo-shi, Hokkaido 060-0807 (JP); Hamada, Seiji, Fujitsu Higashi-Nihon Digital, Kita-ku, Sapporo-shi, Hokkaido 060-0807 (JP)
(74) Representative: HOFFMANN - EITLE

(57) **Abstract**

A CDMA receiver for detecting paths of a direct incoming wave and a delayed incoming wave corresponding to the same channel from a receiving signal and combining the detected signals of a plurality of paths. A searcher unit operating in a first mode in a first search time range and in a second mode in a second search time range, which is narrower than the first search time range, and detecting the paths of the direct incoming wave and the delayed incoming wave in the first mode or in the second mode. A finger unit for inversely diffusing the signals of the paths detected with the searcher unit, combining a plurality of signals inversely diffused and detecting whether synchronization of the combined signal is set up or not. The searcher unit operates in the first mode at the start of channel signal reception and in the second mode after switching from the first mode while synchronization of the combined signal is detected.

## Description

### Technical Field of the Invention

The present invention relates to a base station used in a mobile communication system of IMT 2000, particularly of W-CDMA and CDMA2000 which are the mobile communication techniques of the next generation. Moreover, the present invention relates to a CDMA receiver of such a base station having a path search function. In regard to a searcher unit forming a CDMA receiver, it is particularly requested to improve the path detection accuracy at the initial stage of starting the search operation.

### Related Art

A CDMA receiver comprises a finger unit composed of an inverse diffusing unit, a synchronization detecting unit, a delay adjusting unit and a combining process unit and a searcher unit composed of a correlation detecting unit, a profile averaging process unit, a peak value detecting unit and a path detecting unit. This CDMA receiver has a structure to input, as the ascending receiving data, the data obtained through the analog/digital conversion of the receiving signal of the baseband frequency bandwidth to the inverse diffusion unit and correlation detecting unit.

The CDMA receiver comprises the searcher unit for detecting the path of the channel corresponding to a mobile station from the receiving data. This searcher unit is requested to conduct the path search within the continuous and longer time range because it does not recognize, during the path search at the time of starting the reception, in which timing the path having the highest correlation value can be received. This continuous and longer time range is determined depending on the radius of the cell formed by the base station. This time range is determined assuming the case where a mobile station is located at the furthest area of the cell. The determination method is as follows.

The base station transmits a control signal to a mobile station. The mobile station receives the transmitted control signal and starts the transmission of a signal in an individual channel depending on such received signal. The base station in turn receives the signal of the individual channel to execute the path search. Namely, the time range is determined considering the time required for exchange of the signal between the base station and mobile station. In other words, the time range is determined considering the radius of cell of the base station. Here, this path search is called the wide search mode.

As explained above, during the path search operation at the time of starting the reception of the channel signal, the first path search is executed in the wide search mode. With this first path search, a peak value corresponding to the signal transmitted from the mobile station is detected. From the next search, the path search is conducted only in the short time range before and after the timing of detecting such peak value in the wide search mode. The path search within this short period of time is called the narrow search mode.

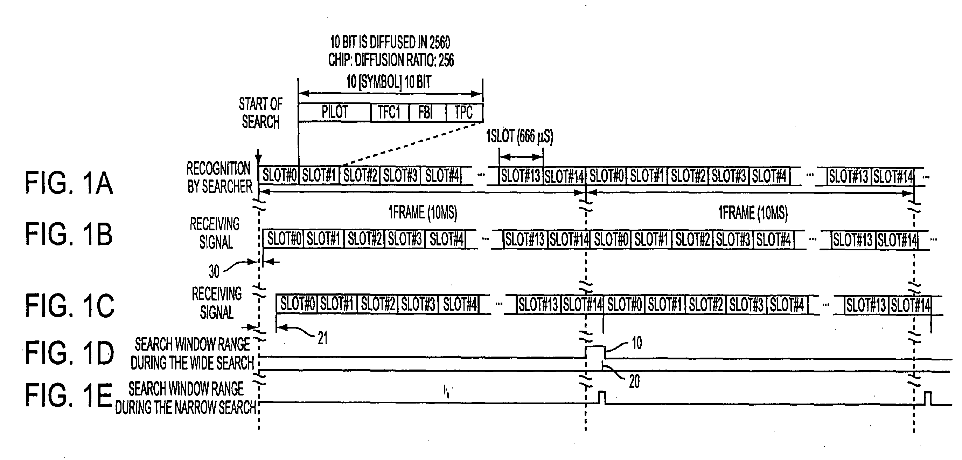

Figs. 1A, 1B, 1C, 1D, and 1E are diagrams for explaining the relationship between the wide-search-mode/narrow-search-mode and the radio frame. Fig. 1A illustrates a radio transmitting frame recognized with the searcher. Fig. 1B illustrates a radio receiving frame from a mobile station when the mobile station is located at the position of a distance of about 5 km from the base station shown with the transmission delay time (30). Fig. 1C illustrates a radio receiving frame from the mobile station when the mobile station is located at the position of a distance of about 40 km from the base station shown with the transmission delay time (21). Fig. 1D illustrates a time range, namely a search window range in the wide search mode. Fig. 1E illustrates a time range, namely a search window range in the narrow search mode. Pulse (20) is the inverse diffusion timing signal when the terminal is around 40 km. (10) is the search range (transmission delay time for detecting the inversed diffusion timing at 40 km). The above two search modes will further be explained in detail with reference to Figs 1A-1E.

The DPCCH field including a control signal among a radio frame composed of two fields being the DPDCH (Dedicated Physical Data Channel) and DPCCH (Dedicated Physical Control Channel) is formed of 15 slots in the period of 10ms. The DPCCH field of each slot is formed of 10 symbols. The correlation detecting unit of the searcher unit obtains a correlation value of each symbol by multiplying the pilot symbol included in the slot with the inverse diffusion code and also obtains the added correlation value for each slot by adding the correlation value of each symbol as much as the number of pilot symbols included in the slot. The obtained correlation value is then averaged for a plurality of slots with the profile average processing unit to obtain the delayed profile. The path detecting unit outputs the slot heading timing information to the finger in the form of pulse by sorting the profile.

The search start timing is designated with the base station transmitting unit of the base station at the time of instructing the start of transmission to the mobile station (for example, when the base station transmits the channel designation control signal to the mobile station via the control channel). The searcher unit starts the search operation with this transmission instructing timing defined as the reception start timing, but the data to be received actually is delayed as much as the transmission delay period because of the transmission delay of the radio wave depending on the distance between the mobile station and base station.

At the time of starting the reception, the base station cannot detect where (what a distance = how many delay time) the mobile station is located within the radius of the cell covered by this same base station. Therefore, the base station obtains the delay profile of a long period by increasing the number of stages of the shift register of the matched filter to detect the path detection in view of finding out the path even under the maximum delay (which may be assumed from the transmission rate of signal wave) in the cell radius (distance) by assuming that the mobile station is located at the furthest area of the cell radius preset in the base station. This search operation is called the wide search mode.

In the narrow search mode, the path search (number of register stages is reduced) is conducted to cover only the area near the maximum path existing area (near the delay time for the maximum path) obtained as a result of the wide search.

It is considered as background for existence of these two modes that when the wide search is always conducted to cover the delay time for the entire range of the cell, because many stages of shift register cannot be obtained for detection of correlation for the reason of the physical size of the circuit, a longer time is required to obtain the profile and the path update time becomes longer. Accordingly, since the path spreading range is not so wide, when the assumed location of path can be detected, the narrow search for searching the peripheral area of such location is enough for the path detection.

The searcher unit is formed of a shift register group of multiple stages or the like and therefore has a large physical circuit size. It is difficult from the physical size limitations of the apparatus to include this circuit for as many as the number of receiving channels. Therefore, channel time multiplexing is conducted in which the circuit of the searcher is used in common with a plurality of channels for the use in the time division mode. In this case, when the update period of one channel becomes short as in the case of the narrow search mode, it can be prevented that the update period becomes longer even at the time of receiving a plurality of channels.

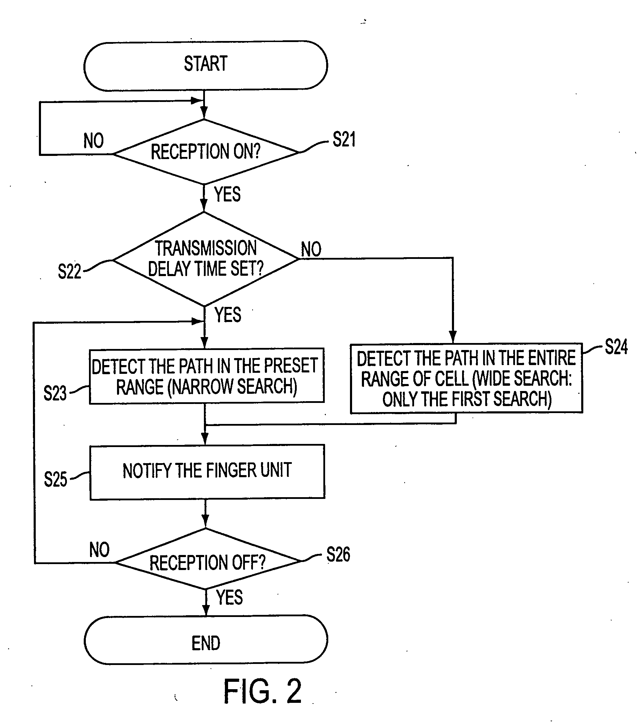

Fig. 2 illustrates a search flow in the related art. First, the receiving ON condition is generated with instruction from the search start timing of Fig. 1A. (S21) whether the transmission time is set or not is determined simultaneously with the receiving ON condition. Determine if the transmission delay time has been previously set (S22). The transmission delay time is set in such a case, for example, when the communication channel is shifted to the other channel panel for the necessity of maintenance of the channel panel having processed such channel in regard to the channel having conducted the data communication or the like. Namely, the transmission delay time is set in such a case that since the relevant channel has conducted the communication with a mobile station, the transmission delay time between the base station and mobile station can be assumed as recognized previously. During the channel search in such a condition that an ordinary initial channel is set, such transmission delay time is usually not set up. Therefore, at the time of an ordinary initial channel setting, the process shifts to the process in the step (S24) from the process of step (S22).

In the step (S24), the path detection corresponding to an entire range is conducted in the wide search mode explained above. As a result, a plurality of pulses are detected and then notified to the finger. (S25) Thereafter, the path detection is conducted for the predetermined range (predetermined range at the center of the path indicating the peak value detected in the wide search mode) preset in the narrow search mode in the step (S23) and the result is sequentially notified to the finger. In the step (S26), the search operation is terminated by detecting the receiving OFF condition.

However, in the method of related art, the path detection is conducted only once in the wide search mode. When the receiving data is not inputted from the mobile station during this wide search mode, it may be generated that noise is erroneously detected as the path from the mobile station.

Namely, since the first search operation is conducted, at the time of starting the search operation, in the wide search mode and thereafter in the narrow search mode, the accurate path can be found under the condition that the data from the mobile station can be inputted upon the start of search operation and thereby the transmission delay time is set. However, if the data from the mobile station is not inputted at the time of starting the search operation, high level noise is erroneously detected as the path.

Moreover, after the first search operation, the search is conducted continuously in the narrow search mode for the area near the path existing position detected erroneously. Therefore, if the path detection due to the operation in the first wide search mode is erroneous, accurate path detection is impossible unless the reception start operation is conducted again from the beginning.

### SUMMARY OF THE INVENTION:

The object of the present invention is to improve the performance of the CDMA receiver for searching the receiving data from mobile stations by switching the wide search mode and narrow search mode. Moreover, it is also an object of the present invention to improve the performance of the path search function in the CDMA receiver. Moreover, it is also the object of the present invention to realize a high speed path detection through comparison with the detection under the condition that the wide search mode is continued without use of the narrow search mode.

In view of achieving the objects explained above, the present invention proposes a CDMA receiver characterized in detecting the paths of the direct incoming wave and the delayed incoming wave corresponding to the same channel from the receiving signal, wherein said receiver is capable of operating in the first mode in the first search time range and in the second mode in the second search time range which is narrower than the first search time range and comprises a searcher unit for detecting the paths of the direct incoming wave and the delayed incoming wave in the first mode and the second mode and a finger unit for receiving the signal of path detected with the searcher through the inverse diffusion, combining a plurality of inversely diffused signals and detecting whether synchronization of the combining signal is set up or not, the searcher unit operates in the first mode at the time of starting the reception of the signal and also operates by switching the operation mode to the second mode from the first mode in such a case that the synchronization of the combining signal is detected in the finger unit.

With the apparatus explained above, the searcher unit continues the search operation for the wide time range in the first mode until synchronization is detected at the finger unit. Thereby, path detection accuracy can be improved.

### BRIEF DESCRIPTION OF THE DRAWINGS

Figs. 1A-1E are diagrams for explaining the relationship between the wide search mode/narrow search mode and the radio frame;
Fig. 2 is a diagram indicating the search operation flowchart of the related art;
Fig. 3 is a diagram indicating a CDMA receiver structure;
Fig. 4 is a diagram indicating details of the correlation detecting unit 321;
Fig. 5 is a schematic diagram of the delay.profile;
Fig. 6 is a diagram indicating details of the finger unit 31;
Fig. 7 is a diagram indicating the synchronization detecting operation of the synchronization detecting unit 66; and
Fig. 8 is a diagram indicating the search operation flowchart in the present embodiment.

### DESCRIPTION OF THE PREFERRED EMBODIMENT

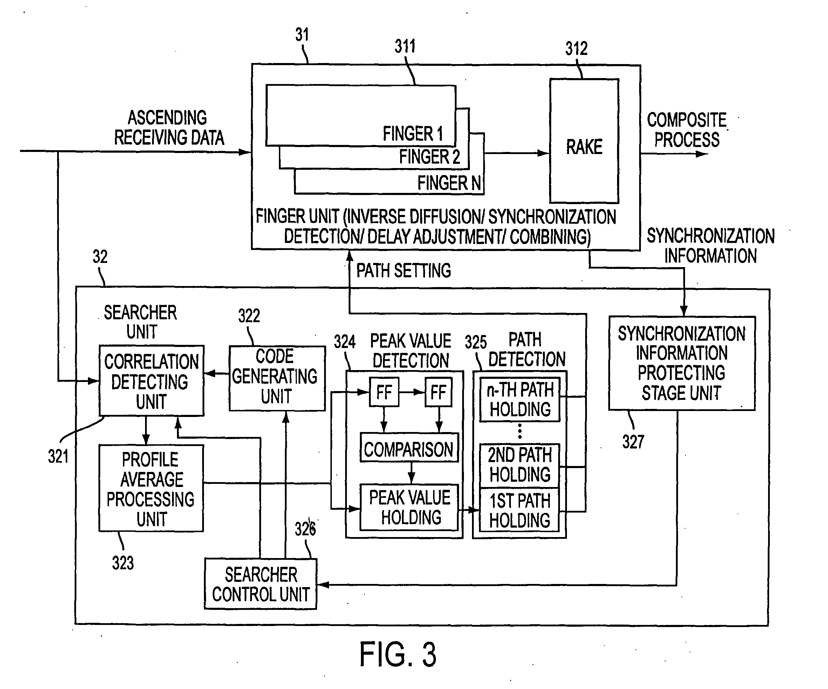

A preferred embodiment of the present invention will be explained. Fig. 3 illustrates an entire part of the structure of the CDMA receiver. 31 designates a finger unit, comprising a plurality of finger processing units 311 corresponding to a plurality of paths and an Rake combining processing unit 312. The finger unit 31 has the inverse diffusion, detection of synchronization, adjustment of delay and Rake combining function. Here, only one finger unit 31 is illustrated but a plurality of fingers are actually provided to simultaneously receive a plurality of channels. 32 designates the searcher unit including the correlation detecting unit 321, code generating unit 322, profile average processing unit 323, peak detecting unit 324, path detecting unit 325, searcher control unit 326 and synchronization information protecting stage unit 327.

The ascending receiving data from the mobile station includes the direct incoming wave and delayed incoming wave corresponding to the same channel. Here, the searcher unit 32 obtains the timing of each incoming wave and then notifies this timing to the finger unit 31 corresponding to the channel processed in the searcher unit 32 in the form of a pulse. This each incoming wave is called the path.

General operations of the searcher unit 32 are explained below in detail. The searcher unit 32 is capable of use in common with a plurality of channels and is then used for a channel on a time division basis. The ascending receiving data inputted to the receiver is then inputted to the correlation detecting unit 321. The correlation detecting unit 321 has the matched filter (correlator group) to detect correlation with the diffusion code (sign) corresponding to the mobile station generated from the code generating unit 322. This code generating unit 322 generates the diffusion code corresponding to the channel designated with the instruction from the searcher control unit 326.

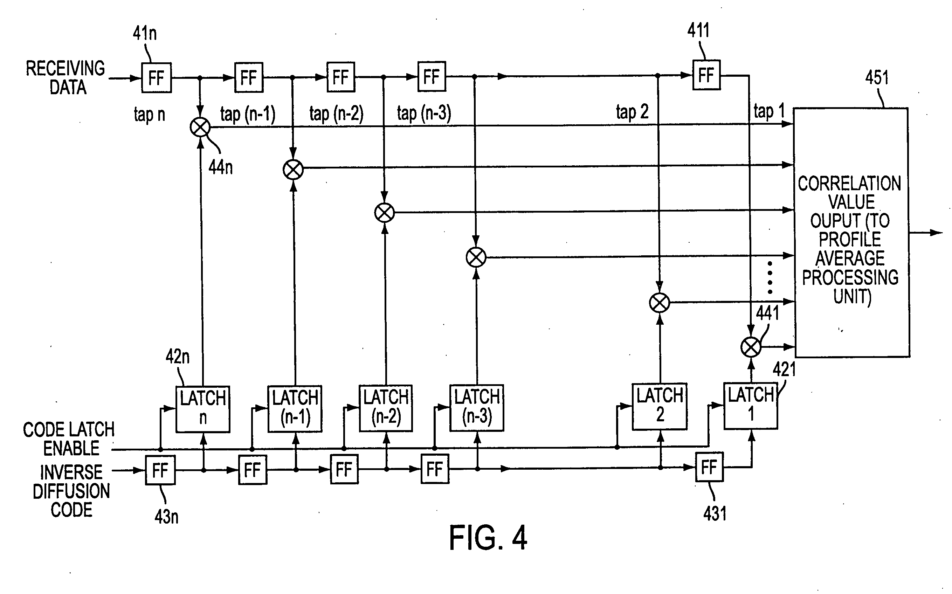

Fig. 4 illustrates details of the correlation detecting unit 321. The correlation detecting unit 321 comprises flip-flops 411 to 41n of a plurality stages to form a first register group for sequentially inputting the receiving data, flip-flops 431 to 43n to form a second register group for inputting the inverse diffusion code corresponding to the channel to be detected, latch circuit groups 421 to 42n of a plurality of stages for respectively latching the codes inputted to the flip-flops 431 to 43n, arithmetic circuits 441 to 44n for calculating the signal of the first register group and the signal of the latch circuit group and an adder for adding the outputs of the arithmetic circuits 441 to 44n. This circuit structure is called the matched filter.

The correlation value of the inverse diffusion code latched in by the timing of the code latch enable signal and the input signal can be calculated with the structure explained above. When the reference counter of the receiver is matched with the search start timing, the code latch enable signal is driven by the slot counter and an output of latch enable is provided with reference to slot counter. In the correlation detecting unit 321, the number of stages of the register group can be changed in the wide search mode or narrow search mode. The number of stages to be used can be changed with a mode control signal from the search control unit 326 explained above.

Returning to Fig. 3, the explanation will be continued. The correlation value obtained in the correlation detecting unit 321 is inputted to the profile average processing unit 323. The profile average processing unit 323 squares the correlation value data to conduct power conversion and then executes the cyclic integration (path averaging process) in view of obtaining the delayed profile (vertical axis: level; lateral axis: time). This delayed profile is then inputted to the peak detecting unit 324 and the value before one clock is always held with two flip-flops FF and comparator. When a value which is smaller than such value is inputted, it is determined that the peak value is inputted. Here, the profile address and data in this time are latched in the peak holding unit and are then inputted to the path detecting unit 325.

The path detecting unit 325 sorts the detected peaks and detects the peaks from the larger one as the first path to nth path. From this detection result, the timing of each incoming wave is obtained and this timing is then notified to the inverse diffusing unit of the finger with the pulse.

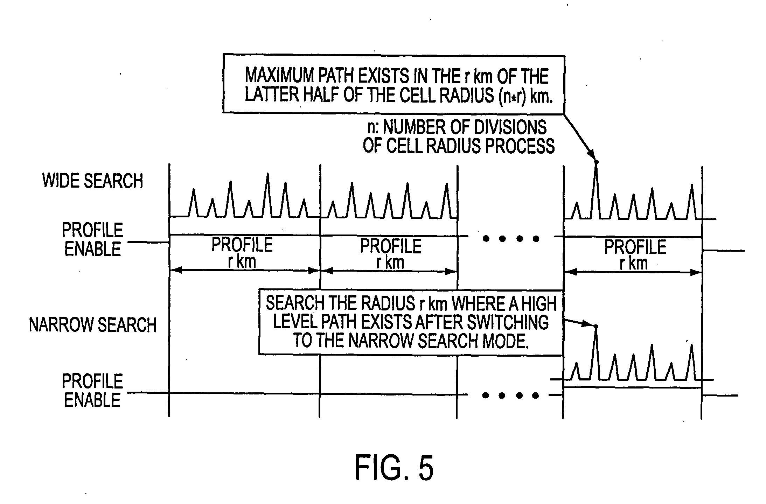

Here, Fig. 5 is a schematic diagram of the delay profile detected with the correlation detecting unit 321. Wide search is the delay profile obtained in the wide search mode. In this case, the cell radius is n*r (n is a desired integer, r is a desired distance). This delay profile is outputted while the profile enable signal is inputted. Narrow search is a profile obtained in the narrow search mode. Namely, this profile can be obtained in the narrow range in the periphery of the maximum path obtained in the wide search mode. Here, the time range in the narrow search mode is defined as the time corresponding to the distance r km. In Fig. 5, since the maximum path is detected in the profile N, the profile N is detected in the narrow search mode but it is generally determined depending on that in which range the narrow search is conducted and in which timing the maximum path is detected.

Returning to Fig. 3, explanation will be continued. The finger unit 31 extracts the original data depending on each timing signal from the searcher unit 32. Therefore the finger unit 31 includes the finger processing unit 311 for processing the ascending receiving data inputted depending on each path and the Rake combining processing unit 312 for Rake combining after the adjustment of delay of the signal from a plurality of finger processing units 311 and outputs the combining signal to the demodulating unit in the subsequent stages not illustrated.

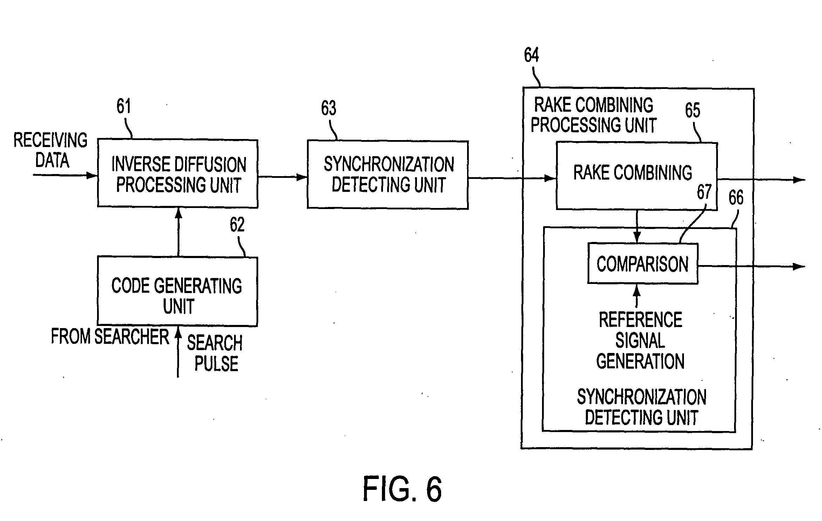

Details of the finger unit 31 will be explained with reference to Fig. 6. The finger unit 31 is provided in a plural number corresponding to a plurality of channels. In Fig. 6, the inverse diffusion processing unit 61, code # generating unit 62 and synchronization detecting unit 63 correspond to the finger processing unit 311 of Fig. 3. Here, only one finger processing unit is illustrated but a plurality of finger processing units, although not illustrated, actually exist corresponding to a plurality of paths. The ascending receiving data is respectively inputted to the inverse diffusion processing unit 61. A pulse indicating the timing of each path inputted depending on the channel is inputted to each code generating unit 62 from the searcher unit 32 and the code corresponding to channel is generated and is then inputted to the inverse diffusion processing unit 61 depending on each pulse. In the inverse diffusion processing unit 61, the receiving data inputted is inversely diffused with the code and is then inputted to the synchronization detecting unit 63.

The synchronization detecting unit 63 detects synchronization of the input signal and then inputs the result to the Rake combining processing unit 64 in the subsequent stages. The Rake combining processing unit 64 includes the Rake combining unit 65 and synchronization detecting unit 66. In the Rake combining unit, the signals inputted from a plurality of finger processing units 311 are adjusted in the delay thereof with the well known technique and then such signals are combined by adding with the weighting in each path level. The signal combined with the Rake combining process is then outputted to the demodulating unit in the subsequent stage and is then inputted to the comparing circuit 67 within the synchronization detecting unit 66.

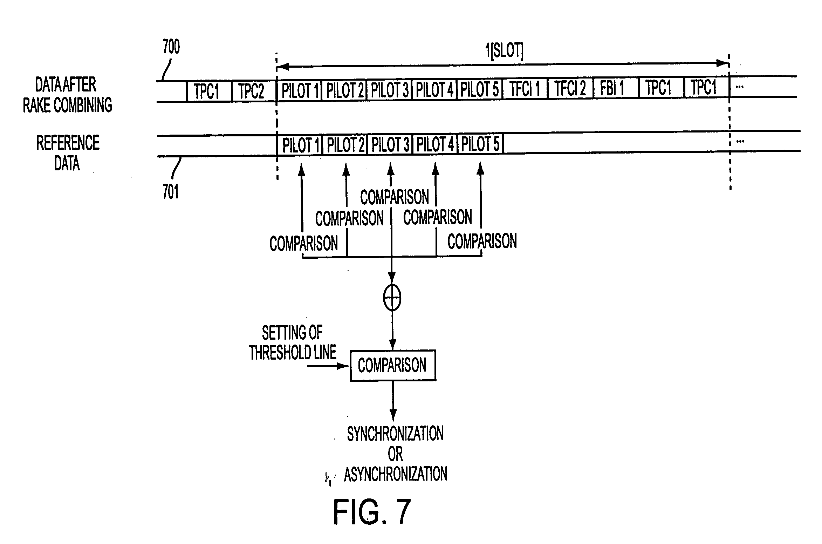

Next, the synchronization detecting operation of the synchronization detecting unit 66 of Fig. 6 will be explained with reference to Fig. 7. 700 indicates the data after the Rake combining process. 701 indicates the reference data. Here, the data after the Rake combining process is compared with the pilot symbol generated as the reference data. Regarding the reference data, the known timing symbol is inputted to the comparator 67 as the reference data in the predetermined timing of the signal after the Rake combining process, namely the input timing of the pilot symbol in the signal after the Rake combining process. The comparator determines that synchronization is set up when the number of pilot symbols (patterns) larger than the preset threshold value is matched with the data after the Rake combining process. Namely, it is determined that the desired channel signal is surely received. If noise is recognized and received erroneously as the path, the pilot symbol is not matched. This synchronization/asynchronization information has been used in the searcher unit of the related art only for the path follow-up control (synchronization: follow-up; asynchronization: no follow-up), but in the present invention, it is also used for the switching of the wide search mode and narrow search mode. In the above explanation, a plurality of finger units 31 are provided depending on the channels, but it is also possible that a memory is provided before and after the synchronization detecting unit 63 and Rake combining processing unit 64 and these units are used for a plurality of channels on a time division basis by processing the signals using a high speed clock.

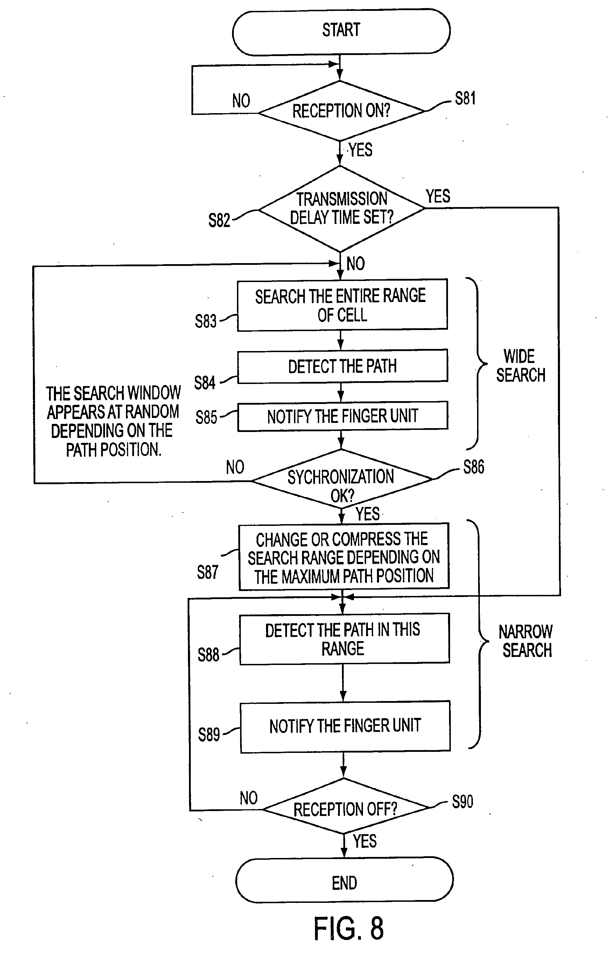

The basic operations of searcher unit 32 and finger unit 31 are explained above. Next, setting and switching control of the two modes, the wide search mode and narrow search mode will be explained. Fig. 8 illustrates the flowchart of the search operation in the present embodiment.

The searcher control unit 326 has a slot counter and a symbol counter corresponding to each channel and can control the search unit corresponding to each channel. When the channel is assigned to a particular mobile station and the first search is started in the receiver (S81), the diffusion code corresponding to the channel assigned to the particular mobile station is set to the code generating unit under the control of the searcher control unit 326. When the channel signal reception is started, it is determined whether the transmission time is set or not (S82). If, it is not set, the search operation is continued in the wide search mode.

As explained above, the search operation is conducted in the time range of the wide search mode as illustrated in Fig. 1D. Namely, the receiving signal in the range Fig. 1D is inputted to detect the correlation value in the correlation detecting unit 321 and the delay profile in the time range of the wide search mode' is generated. In this case, the searcher control unit 326 outputs the control signal indicating the wide search mode to the correlation detecting unit 321 and the correlation detecting unit 321 conducts the process using a plurality of shift register groups for the wide search mode. The path detection is executed in this wide search mode (S84) and the path timing information obtained as a result is notified to the finger unit 31 corresponding to the channel processed in the searcher unit. (S85) The finger 31 inversely diffuses the receiving signal based on the notified path timing information for the Rake combining. For the signal after the Rake combining, synchronization/asynchronization is detected (S86) and the result is then inputted to the synchronization protecting stage unit 327.

The synchronization protecting stage unit 327 can protect the synchronization/asynchronization information to a plurality of channels. Namely, the synchronization information can be notified to the search control unit 326 in unit of channel.

When asynchronization is detected with the synchronization detecting unit 66, the searcher unit 32 operates again in the wide search mode. When the synchronization detection protecting stage unit 327 detects the synchronization for the predetermined number of times or the predetermined period of time for the particular channel, it outputs the synchronization information to the searcher control unit 326. This synchronization information is protected to prevent recognition that synchronization is set up with the setting of path which has been realized accidentally.

The searcher control unit 326 having received the synchronization information switches the operation mode to the narrow search mode from the wide search mode on the occasion of operation for the corresponding channel. In more practical, the searcher control unit 326 outputs a control signal to instruct the operation in the narrow search mode to the correlation control unit 321. The correlation control unit 321 having received such control signal executes the timing control to conduct the search operation in the time range illustrated as Fig. 1E. Namely, the search range is compressed and changed depending on the timing of the maximum path. Moreover, the shift register group of the correlation detecting unit 321 uses a reduced number of stages depending on the time range. (S87)

The searcher unit is set to the narrow search mode corresponding to the desired channel to detect the path in the search range (S88) and notifies the timing information of the path to the finger unit 31 corresponding to the channel processed in the searcher unit. (S89) Thereafter, the search operation is continued in the narrow search mode for the desired channel to execute the path follow-up control. Finally, the search operation for the desired channel is completed with completion of reception of the signal for the desired channel.

According to the present invention, the path infomation can be updated at a short period than that of the wide search operation in the asynchronization period by more accurately setting the path and switching the operation mode to the narrow search mode even in such a case that the data is not inputted immediately after the reception is started by switching the search mode to the wide search mode and narrow search mode based on the synchronization information from the finger in the initial path detecting control of the CDMA receiver formed of the searcher unit and finger unit.

## Claims

1. A CDMA receiver for detecting paths of a direct incoming wave and a delayed incoming wave corresponding to a channel of a receiving signal and combining signals of a plurality of paths detected, comprising:
searcher unit operating in a first mode in a first search time range and in a second mode in a second search time range, which is narrower than said first search time range, and detecting paths of said direct incoming wave and the delayed incoming wave in said first mode or in said second mode, and
finger unit for inversely diffusing signals of the paths detected with said searcher unit, combining a plurality of signals inversely diffused and detecting whether synchronization of said combined signal is set up or not, whereby
said searcher unit operates in said first mode at a time of starting the reception of signal of said channel and then operates in said second mode after switching from said first mode when the synchronization of said combined signal is detected with said finger unit.

2. The CDMA receiver of claim 1, wherein when detection of synchronization with said finger unit is continued for a predetermined time period or longer or for a predetermined number of times or more, said searcher unit switches the operation mode to the second mode from the first mode.

3. The CDMA receiver of claim 1, further comprising:
a correlation detector for inputting a receiving signal to a matched filter to detect a correlation value with the diffusion code corresponding to the channel in view of changing a number of input stages to be used in the matched filter in said first mode and said second mode.

4. A CDMA receiver for detecting paths of a direct incoming wave and a delayed incoming wave corresponding to a channel of areceiving signal and combining signals of a plurality of paths detected corresponding to a plurality of channels, comprising:
a searcher unit to be used for time division corresponding to a plurality of channels operating in a first mode of a first search time range corresponding to respective channels and in a second mode of a second search time range, which is narrower than said first search time range, to detect paths of said direct incoming wave and delayed incoming wave in said first mode or said second mode corresponding to respective channels, and
a finger unit for receiving, through inverse diffusion, a signal of a path detected with said searcher unit corresponding to respective channels, combining a plurality of inversely diffused signals and detecting whether synchronization of said combining signal is set up or not, whereby
said searcher unit operates in said first mode at a time of starting the reception of signals of respective channels and operates by switching the operation mode to said second mode from said first mode corresponding to the respective channels when the synchronization of said combining signal of the respective channels is detected in said finger unit.

5. The CDMA receiver of claim 4, wherein each channel is monitored for whether detection of synchronization in the finger unit is continued for a predetermined time period or longer or for a predetermined number of times or more and the operation mode of said searcher is switched to the second mode from the first mode for a channel in which detection of synchronization is continued for the predetermined time period or longer or for the predetermined number of times or more.

6. A CDMA receiver for detecting paths of a received signal corresponding to a channel and combining signals of a plurality of detected paths, comprising:
a searcher unit operating in a first mode in a first search time range and in a second mode in a second search time range, which is narrower than said first search time range, and detecting paths of a direct incoming wave and a delayed incoming wave in at least one of said first mode and said second mode, and
a finger unit for inversely diffusing signals of the detected paths, combining a plurality of signals inversely diffused and detecting whether synchronization of said combined signal has occurred, wherein
said searcher unit operates in said first mode at a time of starting signal reception of said channel and switches to said second mode when synchronization of said combined signal is detected by said finger unit.

7. The CDMA receiver of claim 6, wherein said searcher unit switches to said second mode when detection of synchronization in said finger unit continues for a predetermined time period.

8. The CDMA receiver of claim 6, wherein said searcher unit switches to said second mode when detection of synchronization in said finger unit continues for a predetermined number of times.

9. The CDMA receiver of claim 6, further comprising:
a correlation detector for inputting the received signal to a matched filter to detect a correlation value with a diffusion code corresponding to the channel in view of changing a number of input stages to be used in the matched filter in said first mode and said second mode.

10. The CDMA receiver of claim 6, wherein said searcher unit utilizing time division operates corresponding to a plurality of channels, operating in said first mode corresponding to respective channels and in said second mode corresponding to respective channels, and
said searcher unit operates by switching the operation mode to said second mode from said first mode corresponding to each respective channel when the synchronization of said combined signal of the respective channel is detected in said finger unit.

11. The CDMA receiver of claim 10, wherein each channel is monitored for whether detection of synchronization in the finger unit continues for at least one of a predetermined time period or longer and a predetermined number of times or more, and the operation mode of said searcher is switched to the second mode from the first mode for a channel in which detection of synchronization is continued for the at least one of predetermined time period or longer and the predetermined number of times or more.

12. A method of a path search function in a CDMA receiver having a plurality of finger units and a searcher unit, comprising the steps of:
operating in at least one of a first mode in a first search time range and in a second mode in a second search time range, which is narrower than said first search time range;
detecting paths of a direct incoming wave and a delayed incoming wave in at least one of said first mode and said second mode;
inversely diffusing signals of the detected paths;
combining a plurality of signals inversely diffused;
detecting whether synchronization of said combined signal has occurred according to a predetermined threshold; and
switching the operating mode between said first mode and said second mode depending upon the detected synchronization of said combined signal.
